# EUROPÄISCHE PATENTSCHRIFT

(11) **EP 1 957 325 B1**
(45) Veröffentlichungstag und Bekanntmachung des Hinweises auf die Patenterteilung: **16.02.2011**
(21) Anmeldenummer: 06829336.4
(22) Anmeldetag: 06.12.2006
(51) Int. Cl.: B60R 21/207

(54) **FAHRZEUGINSASSEN-RÜCKHALTESYSTEME MIT EINEM IN EINEM FAHRZEUGSITZ ANGEORDNETEN AUFBLASBAREN GASSACK**
PASSENGER RESTRAINT SYSTEM COMPRISING AN INFLATABLE AIR BAG AND ARRANGED IN A VEHICLE SEAT
SYSTEME DE RETENUE D'UN PASSAGER DE VEHICULE, DOTE D'UN SAC A GAZ GONFLABLE ET MONTE DANS UN SIEGE DE VEHICULE

(30) Priorität: 06.12.2005 DE 102005059197
(43) Veröffentlichungstag der Anmeldung: 20.08.2008
(73) Patentinhaber: Takata-Petri AG, 63743 Aschaffenburg (DE)
(72) Erfinder: LOIBL, Johann, 89250 Senden (DE); KRAFT, Michael, 89075 Ulm (DE); HEUDORFER, Benedikt, 89278 Nersingen (DE); PURSCHE, Oliver, 89075 Ulm (DE)
(74) Vertreter: Müller, Wolfram Hubertus
(86) Internationale Anmeldenummer: PCT/EP2006/011704
(87) Internationale Veröffentlichungsnummer: WO 2007/065650

(56) Entgegenhaltungen:
- EP-A- 1 588 907
- WO-A-01/49535
- DE-A1- 10 106 238
- DE-A1- 19 635 495
- DE-A1- 19 746 387
- DE-U1- 29 601 497
- GB-A- 2 293 355
- GB-A- 2 322 338
- US-A- 5 630 616
- US-A- 5 636 862
- US-B1- 6 189 916

## Beschreibung

Die Erfindung betrifft ein Fahrzeuginsassen-Rückhaltesystem mit einem in einem Fahrzeugsitz angeordneten aufblasbaren Gassack gemäß dem Oberbegriff des Patentanspruchs 1.

Es besteht allgemein das Bedürfnis, Fahrzeuginsassen-Rückhaltesysteme bereitzustellen, die bei einem Seitenaufprall den stoßabgewandten Insassen mittels eines Gassacks im Sitz halten, um Verletzungen des Insassen durch Kontakt mit dem Fahrzeuginterieur oder anderen Insassen zu vermeiden. Statistiken zeigen dabei, dass ca. 27 bis 30 Prozent der Getöteten oder Schwerverletzten im Seitencrashfall auf der stoßabgewandten Seite saßen.

Aus der WO 01/49535 A1 ist eine Airbaganordnung bekannt, bei der ein Airbag der der Fahrzeugtür abgewandten Seite eines Fahrzeugsitzes in dem Fahrzeugsitz befestigt ist. Im Auslösefall entfaltet sich der Airbag in Fahrtrichtung, womit erreicht werden soll, dass ein Fahrzeuginsasse nicht seitlich aus dem Fahrzeugsitz herausgeschleudert werden kann. Der hierbei verwendete Airbag wird mittels eines an der Außenseite des Airbags angeordneten Bandes stabilisiert und positioniert.

Weiter ist es zum Schutz eines Insassen bei einem Seitenaufprall bekannt, eine Kombination aus einem Dreipunkt-Gurt und einem Zweipunkt-Gurt oder auch Vierpunkt- und Fünfpunkt-Gurtsysteme zu verwenden. Solche Gurtsysteme weisen den Nachteil auf, dass der gewohnte Komfort beim Anlegen eines gewöhnlichen Dreipunkt-Gurtes nicht mehr vorhanden ist und daher das Risiko besteht, dass der Insasse den Sicherheitsgurt überhaupt nicht anlegt.

Die EP-A-1 588 907 beschreibt ein gattungsgemäßes Fahrzeuginsassen-Rückhaltesystem. Dabei ist ein Gassack mit einem Spannband mit einem Fahrzeugsitz verbunden. Aus der GB 2 322 338 A ist bekannt, einen Gassack über ein Spannband an einem Lehnenrahmen zu befestigen.

Der vorliegenden Erfindung liegt die Aufgabe zugrunde, ein Fahrzeuginsassen-Rückhaltesystem mit einem in einem Fahrzeugsitz angeordneten aufblasbaren Gassack zur Verfügung zu stellen, das eine Seitwärtsbewegung oder schräge Vorwärtsbewegung eines Fahrzeuginsassen einschränkt und dabei möglichst knicksteif ausgebildet ist. Insbesondere soll das Fahrzeuginsassen-Rückhaltesystem ermöglichen, dass sich der stoßabgewandte Insasse während eines Seitenaufpralls nicht aus dem Bereich seines Sitzes hinaus bewegen kann und somit ein Kontakt des Insassen mit anderen Insassen oder dem Fahrzeuginterieur verhindert oder zumindest reduziert wird. Dabei soll ein kombinierte Nutzung des Fahrzeuginsassen-Rückhaltesystems mit einem üblichen Dreipunkt-Gurtsystem möglich sein.

Die vorliegende Aufgabe wird erfindungsgemäß durch ein Fahrzeuginsassen-Rückhaltesystem mit den Merkmalen des Anspruchs 1 gelöst. Bevorzugte und vorteilhafte Ausgestaltungen der Erfindung sind in den Unteransprüchen angegeben.

Danach zeichnet sich die Erfindung dadurch aus, einen Gassack des Fahrzeuginsassen-Rückhaltesystems an dem in Fahrtrichtung vorderen Ende des Lehnenrahmens mit diesem zu verbinden. Die Verbindung des Gassacks mit dem Lehnenrahmen erfolgt dabei mittels einer Zusatz-Gewebelage, die zum einen mit dem Gassack und zum anderen mit dem vorderen Ende des Lehnenrahmens verbunden ist. Die gebildete Verbindung des Gassacks mit dem Lehnenrahmen erfolgt entlang einer Verbindungslinie, die sich entsprechend der Form des Lehnenrahmens im Wesentlichen in vertikaler Richtung erstreckt.

Es ist bekannt, dass sich an den beiden Seiten eines Fahrzeugsitzes jeweils ein Lehnenrahmen erstreckt, wobei der Lehnenrahmen im Wesentlichen in Fahrtrichtung ausgerichtet ist und dementsprechend ein vorderes, in Fahrtrichtung weisendes und ein hinteres, der Fahrtrichtung abgewandtes Ende aufweist. Das vordere Ende des Lehnenrahmens umfasst zum einen die in Fahrtrichtung weisende Stirnseite des Lehnenrahmens. Das vordere Ende des Lehnenrahmens umfasst jedoch auch Bereiche des Lehnenrahmens, die an die Stirnseite angrenzen. Ein vorderes Ende im Sinne der vorliegenden Erfindung liegt dabei solange vor, wie der Abstand zwischen der Verbindungsstruktur zur Befestigung des Gassackes am Lehnenrahmen und der Stirnseite des Lehnenrahmens nicht größer ist als die Hälfte des Abstandes zwischen der Stirnseite und dem in Fahrtrichtung hinteren Ende des Lehnenrahmens. Die Verbindungsstruktur ist also in der vorderen Hälfte des Lehnenrahmens angeordnet. In einer Ausgestaltung beträgt der Abstand zwischen der Verbindungsstruktur zur Befestigung des Gassackes am Lehnenrahmen und der Stirnseite des Lehnenrahmens nicht mehr als ein Viertel des Abstandes zwischen der Stirnseite und dem in Fahrtrichtung hinteren Ende des Lehnenrahmens.

Durch die Bereitstellung der Verbindung des Gassacks mit dem Lehnenrahmen an dem in Fahrtrichtung vorderen Ende des Lehnenrahmens wird zum einen eine Entfaltung des Gassackes in Fahrtrichtung erleichtert und eine möglichst weit gegenüber der Rückenlehne des Fahrzeugsitzes vorstehende Gassackform ermöglicht. Zum anderen kann sich der mit dem Lehnenrahmen verbundene Gassack an diesem abstützen, so dass der Gassack insgesamt hinsichtlich seiner Position stabilisiert und gestützt wird. Dies führt dazu, dass die erfindungsgemäße Lösung eine Seitwärtsbewegung oder schräge Vorwärtsbewegung eines Insassen im Falle eines Seitenaufpralls weitgehend einschränken kann. Die bereitgestellte Lösung kann dabei problemlos mit üblichen Dreipunkt-Gurtsystemen zusammenwirken.

Im Vordergrund der Erfindung steht die Bereitstellung eines möglichst knicksteifen Gassacks, der eine Seitwärtsbewegung oder schräge Vorwärtsbewegung eines Fahrzeuginsassens bei einem Seitenaufprall sicher einschränkt. Primär von Bedeutung ist daher die Funktion des Gassacks der Rückhaltung eines Fahrzeuginsassen. Die Funktion der Energieabsorption durch den Gassack ist von lediglich sekundärer Bedeutung. Dementsprechend ist bevorzugt vorgesehen, einen hohen Druck von circa 2 Bar in dem Gassack zu verwirklichen und diesen gasdicht, d.h. ohne Luftausströmöffnungen auszubilden.

Erfindungsgemäß erfolgt die Verbindung des Gassacks mit dem Lehnenrahmen entlang einer Verbindungslinie, die sich entsprechend der Form des Lehnenrahmens im Wesentlichen in vertikaler Richtung erstreckt. Der Gassack ist dabei entlang der Verbindungslinie beispielsweise mittels einer Mehrzahl von Befestigungsstellen (z.B. Verschraubungen) mit dem Lehnenrahmen verbunden. Es ergibt sich eine vertikale Struktur des Gassacks im Bereich der Lehnenanbindung, wodurch sich der Gassack im Bereich des Lehnenrahmens sicher und über eine definierte vertikale Länge an diesem abstützen kann.

Erfindungsgemäß erfolgt des Weiteren die Verbindung des Gassacks mit dem Lehnenrahmen mittels einer Zusatz-Gewebelage, die zum einen mit dem Gassack und zum anderen mit dem vorderen Ende des Lehnenrahmens verbunden ist. Die Verbindung der Zusatz-Gewebelage mit dem Gassack erfolgt beispielsweise über ein Vernähen der Zusatz-Gewebelage und mit einer der Gewebelagen des Gassacks, wobei das Vernähen zumindest entlang des Umfangs der Zusatz-Gewebelage erfolgt. Alternativ kann auch vorgesehen sein, dass die Zusatz-Gewebelage mit einer der Gewebelagen des Gassacks verklebt ist, entweder entlang ihres Randbereiches oder über ihre vollständige Fläche.

Die Verwendung einer Zusatz-Gewebelage zur Befestigung des Gassacks an dem vorderen Ende des Lehnenrahmens ermöglicht zum einen eine einfache unmittelbare Verbindung des Gassacks mit dem Lehnenrahmen. Zum anderen bildet der Gassack im Bereich der Anbringung der Zusatz-Gewebelage aufgrund der übereinander liegenden Gewebelagen einen besonders stabilen und knicksteifen Teilbereich aus, der sich gut an dem Lehnenrahmen abstützen und darüber hinaus auch andere Bereiche oder Teilkammern des Gassacks stabilisieren und positionieren kann.

Zur Verbindung der Zusatz-Gewebelage mit dem vorderen Ende des Lehnenrahmens ist die Zusatz-Gewebelage beispielsweise um ein mit dem vorderen Ende des Lehnenrahmens verbundenes Halteteil geführt, das beispielsweise an der Stirnseite des Lehnenrahmens mit diesem verschraubt ist. Hierdurch wird in einfacher Weise über eine definierte vertikale Länge eine Anbindung des Gassackes an das vordere Ende des Lehnenrahmens erreicht.

In einer anderen Ausgestaltung bildet die Zusatz-Gewebelage eine Schlaufe aus.

Das Fahrzeuginsassen-Rückhaltesystem weist bevorzugt einen Gassack-Modulträger zur Befestigung eines Gasgenerators sowie der Gassackverpackung mit dem gefalteten Gassack daran auf. Der Modulträger ist beispielsweise als gebogenes Blechteil ausgebildet. Es ist bevorzugt vorgesehen, dass auch ein solcher Modulträger an das vordere Ende des Lehnenrahmens angebunden ist. Dabei kann der Modulträger zusammen mit einem Halteteil, das der Befestigung der Zusatz-Gewebelage an dem Lehnenrahmen dient, mit dem Lehnenrahmen verbunden werden. Hierdurch wird eine einfache Konstruktion bereitgestellt. In einer anderen Ausgestaltung ist der Modulträger vollständig oder teilweise in eine Schlaufe oder Tasche eingeführt, die die Zusatz-Gewebelage ausbildet.

In bevorzugten Ausgestaltungen der Erfindung weist der Gassack eine oder mehrere Abnäher zur Ausbildung von einem oder mehreren nicht aufblasbaren Teilbereichen des Gassacks auf. Die Abnäher sind dabei bevorzugt derart ausgebildet, dass der Gassack mindestens eine knicksteife, im Wesentlichen vertikal verlaufende Säule und/oder mindestens eine knicksteife, im Wesentlichen horizontal verlaufende Säule ausbildet. Eine solche Säule bzw. mehrere solchen Säulen werden dabei durch den unmittelbar an den Lehnenrahmen angrenzenden Teilbereich des Gassacks stabilisiert und positioniert. Dabei stützt sich der Teilbereich des aufgeblasenen Gassacks, der mit der Zusatz-Gewebelage verbunden ist, wie erläutert am Lehnenrahmen ab und stellt dadurch eine Stabilisierung und Positionierung des Gassacks insgesamt bereit.

Die Erfindung wird nachfolgend unter Bezugnahme auf die Figuren anhand mehrerer Ausführungsbeispiele näher erläutert. Es zeigen:
- Figur 1: in Schnittansicht ein Ausführungsbeispiel eines Fahrzeuginsassen- Rückhaltesystems, bei dem ein Gassack mit dem vorderen Ende eines Lehnenrahmen verbunden ist;
- Figur 2: eine Darstellung des Details "X" der Figur 1;
- Figur 3: eine Seitenansicht des Fahrzeuginsassen-Rückhaltesystems der Figuren 1 und 2;
- Figur 4: in Schnittansicht ein Ausführungsbeispiel eines Fahrzeuginsassen- Rückhaltesystems, bei dem ein Gassack eine Hauptkammer und eine Zusatzkammer aufweist, die in Strömungsverbindung mit der Hauptkammer steht und sich an der der Fahrtrichtung abgewandten Seite der Hauptkammer an diese anschließt;
- Figur 5: in Schnittansicht ein Ausführungsbeispiel eines Fahrzeuginsassen- Rückhaltessystems, bei dem im Inneren eines Gassacks ein Fangband die beiden Lagen des Gassacks miteinander verbindet;
- Figur 6: in Schnittansicht ein weiteres Ausführungsbeispiel eines Fahrzeuginsassen- Rückhaltesystems, bei dem ein Gassack mit dem vorderen Ende eines Lehnenrahmen verbunden ist;
- Figur 7: ein Ausführungsbeispiel für die Anordnung eines Gasgenerators; und
- Figur 8: ein weiteres Ausführungsbeispiel für die Anordnung eines Gasgenerators.

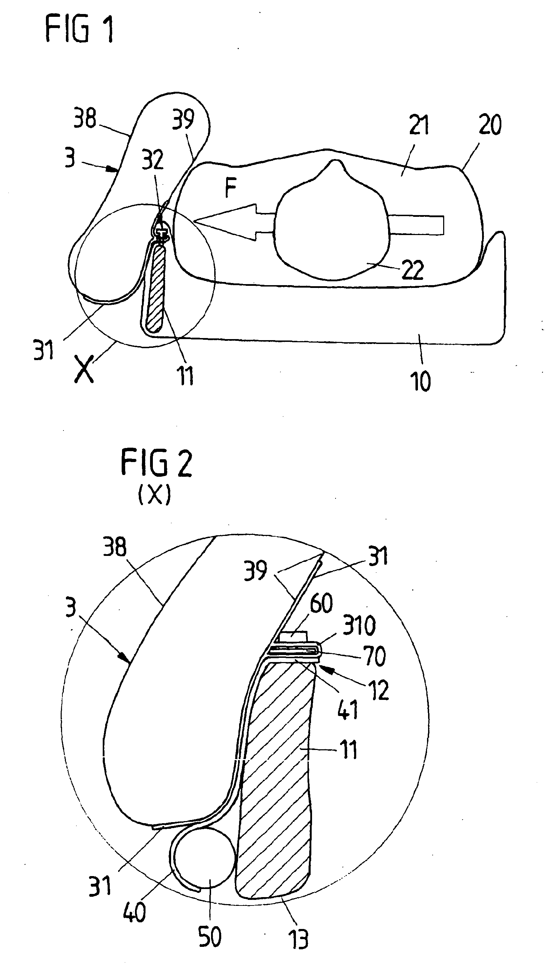

Die Figur 1 zeigt ein Fahrzeuginsassen-Rückhaltesystem zum Schutz eines stoßabgewandten Fahrzeuginsassen 20 bei einem Seitenaufprall. Das Rückhaltesystem umfasst einen Gassack 3, der an den Lehnenrahmen 11 eines Fahrzeugsitzes 10 angebracht ist.

Ein Fahrzeugsitz 10 weist allgemein im Bereich seiner Rückenlehne an den beiden Seiten der Rückenlehne jeweils einen Lehnenrahmen auf, von denen der eine Lehnenrahmen 11 in der Figur 1 dargestellt ist. Auf der anderen Seite des Fahrzeugsitzes 11 befindet sich ein entsprechender Lehnenrahmen, der jedoch in der Regel keinen oder einen in anderer Weise ausgebildeten Gassack aufweist, weswegen nur der eine Lehnenrahmen 11 dargestellt ist.

Die beiden Lehnenrahmen eines Fahrzeugsitzes stellen eine Rahmenstruktur bereit, an der weitere Komponenten des Sitzes in an sich bekannter Weise direkt oder indirekt befestigt sind. Die Lehnenrahmen erstrecken sich dabei im Wesentlichen in vertikaler Richtung im Fahrzeugsitz. Das Querschnittsprofil ist gemäß der Figur 1 näherungsweise rechteckig, wobei die Dicke des Profils gering ist. Die Ausrichtung des Lehnenrahmens erfolgt im Wesentlichen in Fahrtrichtung, so dass der Lehnenrahmen ein in Fahrtrichtung vorderes Ende 12 und ein in Fahrtrichtung hinteres Ende 13 (vgl. Figur 2) aufweist.

Der Gassack 3 weist flach ausgebreitet im entfalteten, nicht aufgeblasenen Zustand zwei übereinander liegende Gewebelagen 38, 39 auf. Nach Aufblasen des Gassackes sind diese beiden Gewebelagen 38, 39 voneinander beabstandet und bilden zwischen sich das Gassackvolumen aus. Es ist des Weiteren eine Zusatz-Gewebelage 31 vorgesehen, die mit der einen Gewebelage 39 des Gassacks 3 verbunden ist und einer Befestigung des Gassacks 3 an dem in Fahrtrichtung vorderen Ende des Lehnenrahmens 11 dient. Die Befestigung erfolgt über eine Befestigungsstruktur 32, die in Bezug auf die Figur 2, die das Detail X der Figur 1 vergrößert darstellt, im einzelnen erläutert wird.

Die Figur 1 zeigt dabei einen Beifahrersitz oder einen mittig oder rechts im Fond angeordneten Sitz. In entsprechender Weise kann das Fahrzeuginsassen-Rückhaltesystem aber auch bei einem Fahrersitz oder einem mittig oder links im Fond angeordneten Sitz realisiert sein (wobei der Gassack dann an der rechten Sitzseite angeordnet ist). Die bevorzugte Realisierung ist somit ein sogenannter Mid Mount-Seitenairbag.

Bei einem Seitenaufprall erfährt der Fahrzeuginsasse 20, dessen Torso 21 und Kopf 22 dargestellt sind, eine in Richtung des Pfeils F wirkende Kraft, die dazu geeignet ist, den Fahrzeuginsassen aus dem Fahrzeugsitz 10 herauszuschleudern. Um dies zu vermeiden, ist der am Lehnenrahmen 11 befestigte Gassack 3 vorgesehen. Durch den Gassack wird eine Seitwärtsbewegung oder schräge Vorwärtsbewegung des Fahrzeuginsassen 20, bevorzugt in Zusammenspiel mit einem herkömmlichen DreiPunkt-Gurtsystem so weit eingeschränkt, dass sich der stoßabgewandte Fahrzeuginsasse 21 während des Seitenaufpralls nicht aus dem Bereich seines Sitzes hinaus bewegt und somit eine Verletzungsgefahr durch Kontakt mit Fahrzeugelementen oder anderen Fahrzeuginsassen verhindert oder reduziert wird. Für einen wirksamen Schutz des Fahrzeuginsassen ist es dabei vorteilhaft, wenn der Gassack 3 insgesamt möglichst stabil und knicksteif ausgebildet ist.

Der Gassack 3 ist gemäß der Figur 2 über die Zusatz-Gewebelage 31, die mit einer Gewebelage 39 des Gassacks 3 verbunden ist, unmittelbar mit der in Fahrtrichtung weisenden Stirnseite 12 des Lehnenrahmens 12 verbunden. Hierzu sind eine Art Tasche 310 der Zusatz-Gewebelage 31, ein Halteteil 70 und Schrauben 60 vorgesehen, die wie folgt zusammenwirken. Die Zusatz-Gewebelage 31 ist in dem Bereich der Tasche 310 um das flach ausgebildete und sich entlang der Stirnseite 12 des Lehnenrahmens erstreckende Halteteil 70 herumgeführt. Mittels Schrauben 60 werden die Gewebetasche 310 und das Halteteil 70 mit der Stirnseite 12 des Lehnenrahmens 11 verschraubt. Hierdurch wird die Zusatz-Gewebelage 31 und damit der Gassack 3 über eine definierte Länge mit dem sich in vertikaler Richtung erstreckenden Lehnenrahmen 11 verbunden, und und zwar an dessen in Fahrtrichtung weisender Stirnseite 12.

Gemäß der Figur 2 ist über die Verschraubung 60 des Weiteren ein Modulträger 40 mit dem Lehnenrahmen 11 verbunden, wozu der bevorzugt aus Blech geformte Modulträger 40 einen flachen Bereich 41 ausbildet, der direkt an die Stirnseite 12 des Lehnenrahmens 11 anschließt und der zusammen mit den beiden Gewebelagen der Gewebetasche 310 und dem Halteteil 70 verschraubt ist.

Der Modulträger 40 ist an seinem der Stirnseite 12 des Lehnenrahmens 11 abgewandten Ende zur Aufnahme und Befestigung eines Gasgenerators 50 ausgebildet, der schematisch dargestellt ist. Der Gasgenerator 50 und der gefaltete Gassack 3 bilden zusammen mit dem Modulträger 40 und weiteren typischen Komponenten eines Gassackmoduls ein solches aus. Solche weiteren Komponenten sind z.B. ein Modulgehäuse, Airbagsensoren und eine Steuervorrichtung. Solche weiteren Elemente sind in den Figuren nicht gesondert dargestellt, da sie dem Fachmann wohl bekannt sind.

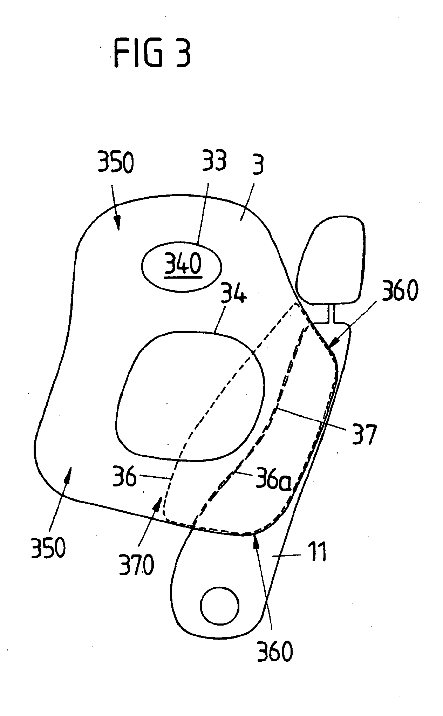

Die Figur 3 zeigt das Fahrzeuginsassen-Rückhaltesystem der Figur 1 in seitlicher Darstellung. Die eine gestrichelte Linie 36 gibt die Verbindungslinie an, entlang derer die Zusatz-Gewebelage 31 mit der einen Gewebelage 39 des Gassacks 3 verbunden ist. Weiter ist gestrichelt eine Verbindungslinie 37 dargestellt, entlang derer das Zusatz-Gewebeteil 31 entsprechend der Darstellung der Figur 2 mit der Stirnseite 12 des Lehnenrahmens 11 verbunden ist.

Die Zusatz-Gewebelage 31 ist entlang ihres Umfanges mit der entsprechenden Gewebelage 39 des Gassacks 3 verbunden. Zusätzlich kann optional eine Naht zwischen der Zusatz-Gewebelage 31 und der Gassack-Gewebelage 39 im Bereich der Anbindung der Zusatz-Gewebelage 31 an den Lehnenrahmen 11 erfolgen, damit der eigentliche Gassack 3 in diesem Anbindungsbereich eng an der Stirnseite 12 des Lehnenrahmens 11 geführt wird. Zur Darstellung einer solchen weiteren Naht ist in der Figur 3 im Wesentlichen deckungsgleich mit der Verbindungslinie 37 eine weitere Linie 36a gezeichnet.

Weiter kann in einer alternativen Ausgestaltung auch vorgesehen sein, dass die Zusatz-Gewebelage 31 mit der entsprechenden Gewebelage 39 des Gassackes verklebt ist, entlang ihres Umfanges oder aber auch großflächig.

Der Gassack 3 weist des Weiteren zwei Abnäher 33, 34 auf, die jeweils einen nicht aufblasbaren Teilbereich 330, 340 des Gassacks bilden.

Bei Entfalten des Gassackes 3 bildet dieser in dem Bereich, der mit der Zusatz-Gewebelage 31 verbunden ist, einen hoch stabilisierten Teilbereich 360 aus, der sich am Lehnenrahmen 11 direkt abstützt und dadurch eine Stabilisierung und Positionierung des Gassackes 3 insgesamt bereitstellt. Durch Anbindung des Gassackes 3 am in Fahrtrichtung vorderen Ende des Lehnenrahmens 11 kann sich der Gassack 3 weit in Fahrtrichtung von der Rückenlehne 10 erstrecken, so dass auch bei einer schrägen Vorwärtsbewegung ein beschleunigter Fahrzeuginsasse zurückgehalten wird. Der Bereich 360 der Anbindung des Gassacks 3 an den Lehnenrahmen 11 stellt zusätzlich einen auf Grund der zusätzlichen Gewebelage 31 und der Abstützung direkt am Lehnenrahmen 11 stabilisierend und positionierend wirkenden Teilbereich dar.

Durch diese Stabilisierung und Positionierung ist es möglich, dass auch andere Teilbereiche des Gassackes stabilisiert werden. Insbesondere bildet im Ausführungsbeispiel der Figur 3 der Gassack 3 in Fahrtrichtung angrenzend an die nicht aufblasbaren Teilbereiche 330, 340 (und durch diese gebildet) eine im Wesentlichen vertikal verlaufende, knicksteife Säule 350 aus. Weiter bildet der Gassack 3 unterhalb des nicht aufblasbaren Teilbereichs 330 eine im Wesentlichen horizontal verlaufende Säule 370 aus. Diese Säulen 350, 370 werden über den stabilisierend wirkenden Teilbereich 360 ebenfalls stabilisiert und gegen ein Einknicken oder Auslenken gestärkt.

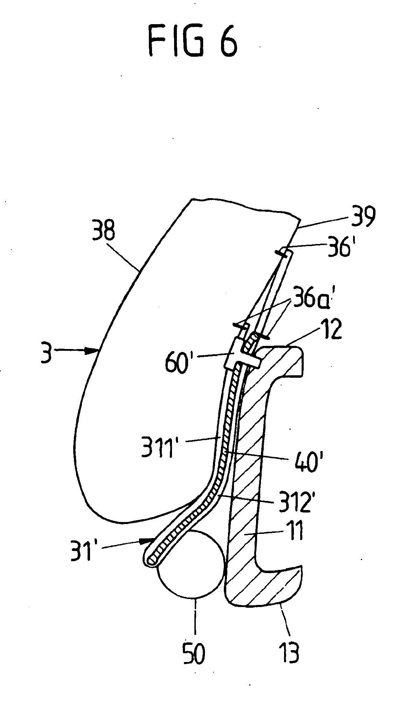

Die Figur 6 zeigt eine Abwandlung des Ausführungsbeispiels der Figuren 1 bis 3. Es sind wiederum ein Gassack 3 mit zwei Gewebelagen 38, 39, ein Lehnenrahmen 11, ein Modulträger 40', ein Gasgenerator 50, eine Zusatz-Gewebelage 31' sowie eine Befestigung 60' zur Verbindung der Zusatz-Gewebelage 31' mit dem Lehnenrahmen 11 vorgesehen.

Anders als beim Ausführungsbeispiel der Figuren 1 bis 3 erfolgt die Befestigung der Zusatz-Gewebelage 31' nicht an der Stirnseite 12 des Lehnenrahmens 11, sondern angrenzend an die Stirnseite 12 in einem Bereich des Lehnenrahmens 11, der sich im Wesentlichen in Fahrtrichtung erstreckt.

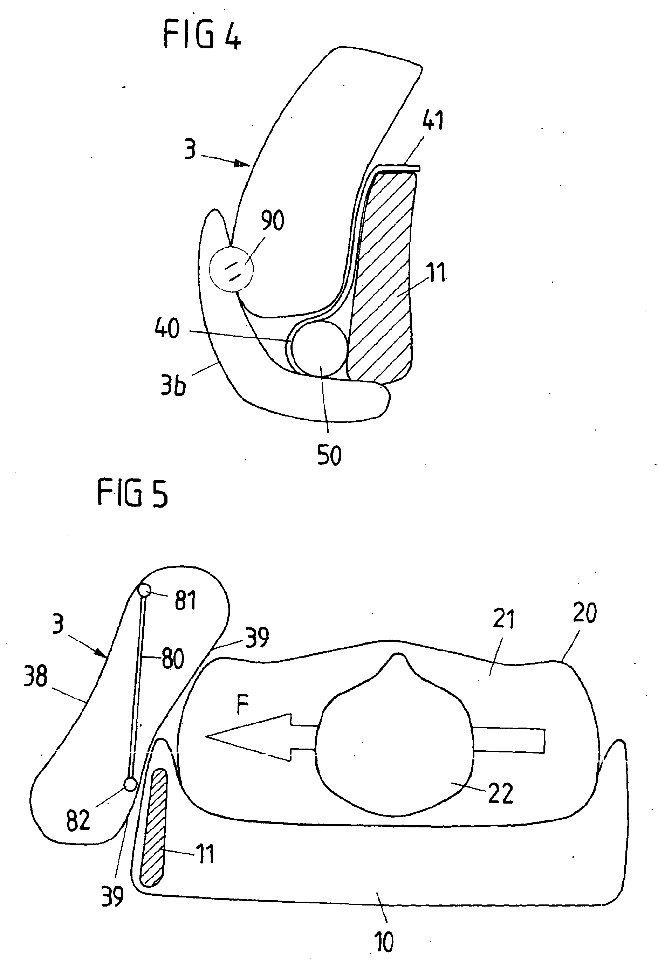

Die Zusatz-Gewebelage 31' ist in dem Ausführungsbeispiel der Figur 4 als Tasche ausgebildet, die zum einen durch eine dem Gassack 3 zugewandte Lage 311' und zum anderen durch eine dem Gassack 3 abgewandte Lage 312' ausgebildet ist. Der Modulträger 40' ist in diese Tasche komplett eingeführt und ist somit von den beiden Gewebelagen 311', 312' umgeben.

Zur Befestigung der Zusatz-Gewebelage 31' an dem Gassack 3 bzw. dessen Gewebelage 39 sind zwei Nähte 36', 36a' vorgesehen. Die eine Naht 36a' verläuft angrenzend zur und damit im Wesentlichen deckungsgleich mit der Befestigung 60' und die durch die Befestigung 60' bereitgestellte, senkrecht zur Bildebene verlaufende Befestigungslinie zwischen dem Gassack 3 und dem Lehnenrahmen 11. Hierdurch wird der aufgebasene Gassack 3 in vertikaler Richtung an dem Lehnenrahmen 33 ausgerichtet. Die weitere Naht 36' verbindet einen Randbereich der Zusatz-Gewebelage 31' mit dem Gassack. Die weitere Naht 36' kann dabei umlaufend ausgebildet sein, so dass auch im in Fahrtrichtung hinteren Bereich (angrenzend an den Modulträgers 40') eine Verbindung zwischen Zusatz-Gewebelage 31' und Gassack 3 vorliegt. In weiteren Ausgestaltungen können weitere Nähte vorhanden sein.

Die Befestigung 60' ist beispielsweise über durch Schrauben oder Bolzen ausgebildet und durchgreift in einer Ausgestaltung die dem Gassack 3 abgewandte Lage 312' sowie den Modulträger 40'. Entsprechende Schrauben oder Bolzen können dabei an dem Modulträger 40' vormontiert sein. In anderen Ausführungsvarianten durchgreift die Befestigung 60' beide Lagen 311', 312' der Zusatz-Gewebelöage 31' sowie den Modulträger 40'.

Die Figur 4 zeigt ein weiteres Ausführungsbeispiel eines Fahrzeuginsassen-Rückhaltesystems. Es ist wiederum ein Gassack 3 vorgesehen, der mit einem Lehnenrahmen 11 eines Kraftfahrzeugsitzes verbunden ist. Die Anbindung erfolgt entsprechend den Figuren 1 bis 3 oder 6. Es sind ein Modulträger 40 und ein Gasgenerator 50 vorgesehen. Der Modulträger ist in einem abgeflachten Bereich 41 mit der Stirnseite des Lehnenrahmens 11 verbunden.

Der Gassack 3 besteht im Ausführungsbeispiel der Figur 4 aus zwei Teilkammern, einer sich in Fahrtrichtung erstreckenden Hauptkammer 3a, die im Auslösefall allein unmittelbar mit dem Gas des Gasgenerators 50 befüllt wird und einer mit der Hauptkammer 3a verbundenen Zusatzkammer 3b. Die Zusatzkammer 3b schließt sich an der der Fahrtrichtung abgewandten Seite der Hauptkammer 3a an diese an. Es liegt eine Strömungsverbindung 90 zwischen der Hauptkammer 3a und der Zusatzkammer 3b vor, so dass im Auslösefall Gas von der Hauptkammer 3a in die Zusatzkammer 3b strömt.

Die Zusatzkammer 3b ist nun derart geformt, dass sie den Fahrzeugsitz an seiner der Fahrtrichtung abgewandten, also hinteren Seite seitlich zumindest teilweise nach Art einer Kralle umfasst. Durch die Zusatzkammer 3b und deren Umgreifen der Sitzlehne wird der Gassack 3 insgesamt zusätzlich stabilisiert, so dass die Hauptkammer 3a eine höhere Knicksteifigkeit und Positionstreue bei Aufprall eines Fahrzeuginsassen aufweist.

Die Zusatzkammer 3b ist bevorzugt im Querschnitt sichelförmig oder boomerang-förmig ausgebildet, wodurch ein Umgreifen der Rückseite des Fahrzeugsitzes besonders effektiv möglich ist.

Es wird darauf hingewiesen, dass die Strömungsverbindung 90 zwischen den beiden Kammern 3a, 3n grundsätzlich in beliebiger Weise ausgebildet sein kann. Die vorhandene Darstellung ist lediglich schematisch zu verstehen. Beispielsweise kann von der einen Kammer 3a ein Rüssel in die andere Kammer 3b ragen, über den ab einem bestimmten Innendruck in der Hauptkammer 3a Gas in die Zusatzkammer 3b geleitet wird.

Weiter wird darauf hingewiesen, dass statt einer Zusatzkammer 3b auch mehrere Zusatzkammern vorgesehen sein können, wobei entweder sämtliche Zusatzkammern durch die Hauptkammer 3a befüllt werden oder aber eine weitere Zusatzkammer durch eine durch die Hauptkammer zuvor befüllte Zusatzkammer befüllt wird.

Die Figur 5 zeigt ein weiteres Ausführungsbeispiel. Es ist wiederum im Querschnitt ein Fahrzeugsitz 10 mit einem Lehnenrahmen 11 dargestellt, in dem sich ein Fahrzeuginsasse 20 mit Torso 21 am Kopf 22 befindet. Hinsichtlich des Aufbaus des Fahrzeugsitzes wird auf die Erläuterungen zur Figur 1 verwiesen. Der Gassack 3 ist, ebenso wie der Gassack der Figur 4, entsprechend der Ausgestaltung der Figuren 1 bis 3 mit der Stirnseite des Lehnenrahmens 11 verbunden oder entsprechend der Ausgestaltung der Figur 6 angrenzend an die Stirnseite des Lehnenrahmens mit diesem verbunden.

Zur Stabilisierung des Gassacks 3 und der Bereitstellung einer hohen Knicksteifigkeit gegenüber einem aufprallenden Insassen 20 ist im Inneren des Gassacks 3 ein Fangband 80 vorgesehen, das zum einen über einen Anbindungspunkt 81 mit der einen Gewebelage 38 und zum anderen über einen Anbindungspunkt 82 mit der anderen Gewebelage 39 verbunden ist. Das Fangband 80 erstreckt sich bevorzugt entsprechend der Darstellung der Figur 5 im Wesentlichen in Fahrtrichtung. Bei einer auf den Gassack 3 wirkenden Kraft F stabilisiert das Fangband 80 den Gassack 3 zusätzlich gegenüber einem Einknicken oder Ausweichen.

In alternativen Ausführungsbeispielen sind nicht nur ein Fangband 80, sondern eine Vielzahl von Fangbändern vorgesehen, die parallel verlaufend oder auch sich kreuzend ausgebildet sein können.

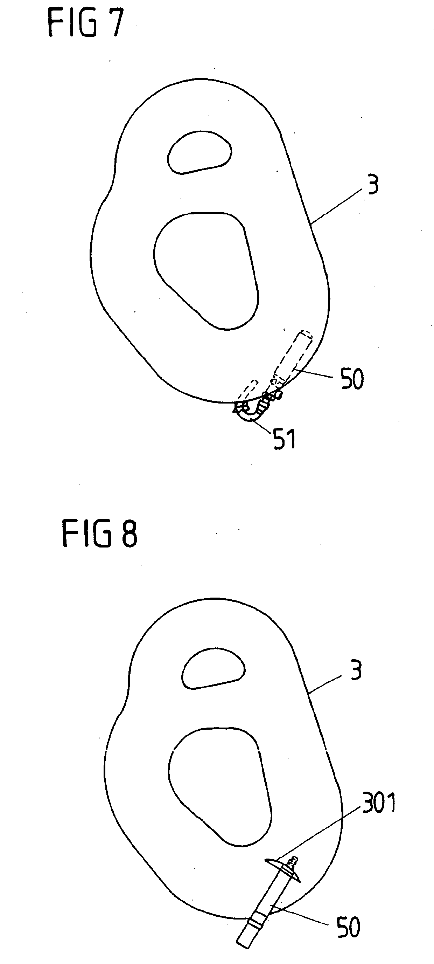

Die Anordnung des Gasgenerators kann in den beschriebenen Ausführungsbeispielen auf verschiedene Weise erfolgen. In einer in der Figur 7 dargestellten Ausführungsform ist der Gasgenerator 50 zwischen dem Gassack 3 und dem Lehnenrahmen angeordnet. Ein gebogenes Rohr 51 ist mit der Ausgangsöffnung des Gasgenerators 50 verbunden und ragt in den Gassack 3 hinein bzw. ist mit einer Befüllungsöffnung des Gassackes verbunden. Das Rohr kann dabei auch als flexibler Schlauch oder ähnliches ausgebildet sein. Das Rohr weist an seinem im Gassack angeordneten Ende Löcher auf, die das Gas im Auslösefall in unterschiedliche Richtungen abgeben, wobei Schubneutralität gegeben ist, d. h. die auf den Gassack durch das austretende Gas übertragenen Kräfte heben sich im Wesentlichen auf. Der Gassack ist an dem Rohr beispielsweise mittels einer Klemmverbindung befestigt.

Es wird darauf hingewiesen, dass in der Darstellung der Figur 7 der Gasgenerator 50 sich hinter dem Gassack 3 befindet und das Rohr 51 aus der Bildebene heraus gebogen ist.

In einem weiteren, in der Figur 8 dargestellten Ausführungsbeispiel ist der Gasgenerator 50 teilweise oder vollständig innerhalb des Gassacks 3 angeordnet. Die Austrittsöffnung des Gasgenerators 50 (nicht dargestellt) befindet sich dabei innerhalb des Gassacks 3. Das eine Ende des Gasgenerators 50 liegt im Ausführungsbeispiel der Figur 8 außerhalb des Gassacks, kann alternativ jedoch ebenfalls im Gassack 3 angeordnet sein. Zum Einführen des Gasgenerators 50 oder eines Teils des Gasgenerators 50 in den Gassack 3 weist dieser in einer seiner Lagen eine Schlitz 301 auf. Der Gassack 3 ist direkt an den Gasgenerator 50 befestigt, beispielsweise mittels einer Klemmverbindung.

Es wird darauf hingewiesen, dass das gefaltete Luftsackgewebe in einer Ausgestaltung in x-Richtung (also in Fahrtrichtung) vor dem Füllelement liegt. Hierdurch wird sichergestellt, dass die Entfaltung primär in x-Richtung gerichtet ist. Anderenfalls würde die Gefahr bestehen, dass der Luftsack sich zu sehr in Richtung des Innenraums (y-Richtung) entfaltet.

Die Ausführungsbeispiele der Figuren 1 bis 3, der Figur 4 und der Figur 5 können auch kombiniert werden. Gleiches gilt für die Ausführungsbeispiele der Figur 6, der Figur 4 und der Figur 5. Beispielsweise kann auch der Gassack der Figur 1 oder der Figur 6 ein Fangband 80 entsprechend der Figur 5 aufweisen oder eine Zusatzkammer 3b entsprechend der Figur 4 ausbilden. Auch kann beispielsweise die Ausgestaltung der

Figur 4 mit der Ausgestaltung 5 kombiniert werden.

## Patentansprüche

1. Fahrzeuginsassen-Rückhaltesystem mit einem Fahrzeugsitz und mit einem in dem Fahrzeugsitz (10) angeordneten aufblasbaren Gassack (3), der sich im Auslösefall auf der dem Fahrzeuginneren zugewandten Seite des Fahrzeugsitzes (10) zumindest teilweise in Fahrtrichtung entfaltet, wobei der Fahrzeugsitz (10) einen Lehnenrahmen (11) aufweist, der sich im Fahrzeugsitz (10) in im wesentlichen vertikaler Richtung erstreckt und im wesentlichen in Fahrtrichtung ausgerichtet ist,
**dadurch gekennzeichnet, dass**
der Gassack (3) an dem in Fahrtrichtung vorderen Ende (12) des Lehnenrahmens (11) mit diesem verbunden ist, wobei die Verbindung des Gassacks (3) mit dem Lehnenrahmen (11) mittels einer Zusatz-Gewebelage (31, 31') erfolgt, die zum einen mit dem Gassack (3) und zum anderen mit dem vorderen Ende (12) des Lehnenrahmens (11) verbunden ist, und wobei die **dadurch** gebildete Verbindung des Gassacks (3) mit dem Lehnenrahmen (11) entlang einer Verbindungslinie (37) erfolgt, die sich entsprechend der Form des Lehnenrahmens (11) im Wesentlichen in vertikaler Richtung erstreckt.

2. Fahrzeuginsassen-Rückhaltesystem nach Anspruch 1, **dadurch gekennzeichnet, dass** die Verbindung des Gassacks (3) mit dem Lehnenrahmen (11) an der in Fahrtrichtung weisenden Stirnseite (12) des Lehnenrahmens (11) erfolgt.

3. Fahrzeuginsassen-Rückhaltesystem nach Anspruch 1, **dadurch gekennzeichnet, dass** die Verbindung des Gassacks (3) mit dem Lehnenrahmen (11) angrenzed an die in Fahrtrichtung weisende Stirnseite (12) des Lehnenrahmens (11) erfolgt.

4. Fahrzeuginsassen-Rückhaltesystem nach Anspruch 1 oder 3, **dadurch gekennzeichnet, dass** der Abstand zwischen der Verbindungsstruktur (60') zur Befestigung des Gassackes (3) am Lehnenrahmen (11) und der Stirnseite (12) des Lehnenrahmens (11) nicht größer ist als die Hälfte des Abstandes zwischen der Stirnseite (12) und dem in Fahrtrichtung hinteren Ende (13) des Lehnenrahmens (11).

5. Fahrzeuginsassen-Rückhaltesystem nach einem der vorangehenden Ansprüche, **dadurch gekennzeichnet, dass** der Gassack (3) entlang der Verbindungslinie (37) mittels einer Mehrzahl von Befestigungsstellen (32) mit dem Lehnenrahmen (11) verbunden ist.

6. Fahrzeuginsassen-Rückhaltesystem nach einem der vorangehenden Ansprüche, **dadurch gekennzeichnet, dass** die Verbindung der Zusatz-Gewebelage (31) mit dem Gassack (3) ein Vernähen der Zusatz-Gewebelage (31) mit einer der Gewebelagen (39) des Gassacks (3) entlang ihres Umfangs umfasst.

7. Fahrzeuginsassen-Rückhaltesystem nach einem der vorangehenden Ansprüche, **dadurch gekennzeichnet, dass** die Verbindung der Zusatz-Gewebelage (31) mit dem Gassack (3) ein Verkleben der Zusatz-Gewebelage (31) mit einer der Gewebelagen (39) des Gassacks (3) umfasst.

8. Fahrzeuginsassen-Rückhaltesystem nach einem der vorangehenden Ansprüche, **dadurch gekennzeichnet, dass** zur Verbindung der Zusatz-Gewebelage (31) mit dem vorderen Ende (12) des Lehnenrahmens (11) die Zusatz-Gewebelage (31) um ein mit dem vorderen Ende des Lehnenrahmens (11) verbundenes Halteteil (70) geführt ist.

9. Fahrzeuginsassen-Rückhaltesystem nach Anspruch 8, **dadurch gekennzeichnet, dass** das Halteteil (70) mit dem vorderen Ende (12) des Lehnenrahmens (11) verschraubt ist.

10. Fahrzeuginsassen-Rückhaltesystem nach Anspruch 8 oder 9, **dadurch gekennzeichnet, dass** das Halteteil (70) mit der in Fahrtrichtung weisenden Stirnseite (12) des Lehnenrahmens (11) verbunden ist.

11. Fahrzeuginsassen-Rückhaltesystem nach einem der Ansprüche 1 bis 8, **dadurch gekennzeichnet, dass** die Zusatz-Gewebelage (31') eine Schlaufe mit einer dem Gassack (3) zugewandten Lage (311') und einer dem Gassack (3) abgewandten Lage (312') ausbildet.

12. Fahrzeuginsassen-Rückhaltesystem nach Anspruch 11, **dadurch gekennzeichnet, dass** die Zusatzgewebelage (31') angrenzend an die Stirnseite (12) des Lehnenrahmens (11) mit diesem verbunden ist.

13. Fahrzeuginsassen-Rückhaltesystem nach einem der vorangehgenden Ansprüche, **dadurch gekennzeichnet, dass** zusätzlich ein Gassack-Modulträger (40) vorgesehen ist, der ebenfalls mit dem vorderen Ende (12) des Lehnenrahmens (11) verbunden ist.

14. Fahrzeuginsassen-Rückhaltesystem nach Anspruch 13, soweit rückbezogen auf Anspruch 8, **dadurch gekennzeichnet, dass** der Modulträger (40) zusammen mit dem Halteteil (70) mit dem vorderen Ende (12) des Lehnenrahmens (11) verbunden ist.

15. Fahrzeuginsassen-Rückhaltesystem nach Anspruch 13, soweit rückbezogen auf Anspruch 11, **dadurch gekennzeichnet, dass** der Modulträger (40) in der durch die Zusatzgewebelage (31') gebildeten Schlaufe angeordnet ist und zusammen mit mindestens einer Lage der Schlaufe mit dem vorderen Ende (12) des Lehnenrahmens (11) verbunden ist.

16. Fahrzeuginsassen-Rückhaltesystem nach einem der vorangehenden Ansprüche, **dadurch gekennzeichnet, dass** der Gassack (3) einen oder mehrere Abnäher (33, 34) zur Ausbildung von einem oder mehreren nicht aufblasbaren Teilbereichen (330, 340) des Gassacks (3) aufweist.

17. Fahrzeuginsassen-Rückhaltesystem nach einem der vorangehenden Ansprüche, **dadurch gekennzeichnet, dass** der Gassack (3) mindestens eine knicksteife, im wesentlichen vertikal verlaufende Säule (350) ausbildet.

18. Fahrzeuginsassen-Rückhaltesystem nach einem der vorangehenden Ansprüche, **dadurch gekennzeichnet, dass** der Gassack (3) mindestens eine knicksteife, im wesentlichen horizontal verlaufende Säule (370) ausbildet.

19. Fahrzeuginsassen-Rückhaltesystem nach einem der vorangehenden Ansprüche, **dadurch gekennzeichnet, dass** der Bereich (360) des aufgeblasenen Gassacks (3), der mit der Zusatz-Gewebelage (31) verbunden ist, sich am Lehnenrahmen (11) abstützt und **dadurch** eine Stabilisierung und Positionierung des Gassacks (3) bereitstellt.

20. Fahrzeuginsassen-Rückhaltesystem nach einem der vorangehenden Ansprüche, **dadurch gekennzeichnet, dass** der aufgeblasene Gassack (3) eine Hauptkammer (3a) und mindestens eine Zusatzkammer (3b) aufweist, wobei die Hauptkammer (3a) an dem in Fahrtrichtung vorderen Ende des Lehnenrahmens (11) an diesen angebunden ist und die Zusatzkammer (3b) sich an der der Fahrtrichtung abgewandten Seite des Hauptkammer (3a) an diese anschließt und in Strömungsverbindung mit der Hauptkammer (3a) steht.

21. Fahrzeuginsassen-Rückhaltesystem nach Anspruch 20, **dadurch gekennzeichnet, dass** die mindestens eine Zusatzkammer (3b) den Fahrzeugsitz (10) an seiner der Fahrtrichtung abgewandten Seite seitlich zumindest teilweise umgreift.

22. Fahrzeuginsassen-Rückhaltesystem nach einem der vorangehenden Ansprüche, **dadurch gekennzeichnet, dass** der Gassack (3) mindestens ein im Inneren des Gassacks (3) verlaufendes Fangband (80) aufweist, das im aufgeblasenen Zustand eine erste Lage (38) des Gassacks und eine zweite Lage (39) des Gassacks miteinander verbindet.

23. Fahrzeuginsassen-Rückhaltesystem nach Anspruch 22, **dadurch gekennzeichnet, dass** das Fangband (80) sich im aufgeblasenen Gassack im wesentlichen in Fahrtrichtung erstreckt.

24. Fahrzeuginsassen-Rückhaltesystem nach einem der vorangehenden Ansprüche, **dadurch gekennzeichnet, dass** der Gasinnendruck im aufgeblasenen Gassack (3) bei über 1,5 bar, besonders bevorzugt bei etwa 2 bar liegt.

25. Fahrzeuginsassen-Rückhaltesystem nach einem der vorangehenden Ansprüche, **dadurch gekennzeichnet, dass** der Gassack (3) keine Gasaustrittsöffnungen aufweist.

26. Fahrzeuginsassen-Rückhaltesystem nach einem der vorangehenden Ansprüche, **dadurch gekennzeichnet, dass** der mit dem vorderen Ende (12) des Lehnenrahmens (11) über eine definierte Länge verbundene, gefaltete Gassack (3) in im wesentlichen vertikaler Richtung entlang des Lehnenrahmens (11) im Fahrzeugsitz (10) verstaut ist.

## Claims

1. A vehicle occupant restraint system with a vehicle seat having an inflatable airbag (3) which is arranged in the vehicle seat (10) and which, in the event of triggering, unfolds at least partially in the direction of travel on that side of the vehicle seat (10) which faces toward the vehicle interior, with the vehicle seat (10) having a backrest frame (11) which extends in the vehicle seat (10) in a substantially vertical direction and which is aligned substantially in the direction of travel,
**characterized in that**
the airbag (3) is connected to the backrest frame (11) at the front end (12) thereof in the direction of travel, wherein the connection of the airbag (3) to the backrest frame (11) takes place by means of an auxiliary material layer (31, 31') which is connected firstly to the airbag (3) and secondly to the front end (12) of the backrest frame (11), and wherein the thereby formed connection of the airbag (3) to the backrest frame (11) takes place along a connecting line (37) which extends in a substantially vertical direction corresponding to the shape of the backrest frame (11).

2. The vehicle occupant restraint system as claimed in claim 1, **characterized in that** the connection of the airbag (3) to the backrest frame (11) takes place at that end side (12) of the backrest frame (11) which points in the direction of travel.

3. The vehicle occupant restraint system as claimed in claim 1, **characterized in that** the connection of the airbag (3) to the backrest frame (11) takes place adjacent to that end side (12) of the backrest frame (11) which points in the direction of travel.

4. The vehicle occupant restraint system as claimed in claim 1 or 3, **characterized in that** the spacing between the connecting structure (60') for fastening the airbag (3) to the backrest frame (11) and the end side (12) of the backrest frame (11) is not greater than half of the spacing between the end side (12) of the backrest frame (11) and the rear end (13) of the backrest frame (11) in the direction of travel.

5. The vehicle occupant restraint system as claimed in one of the preceding claims, **characterized in that** the airbag (3) is connected to the backrest frame (11) along the connecting line (37) by means of a plurality of fastening points (32).

6. The vehicle occupant restraint system as claimed in one of the preceding claims, **characterized in that** the connection of the auxiliary material layer (31) to the airbag (3) comprises a stitched connection of the auxiliary material layer (31) to one of the material layers (39) of the airbag (3) along its periphery.

7. The vehicle occupant restraint system as claimed in one of the preceding claims, **characterized in that** the connection of the auxiliary material layer (31) to the airbag (3) comprises an adhesively bonded connection of the auxiliary material layer (31) to one of the material layers (39) of the airbag (3).

8. The vehicle occupant restraint system as claimed in one of the preceding claims, **characterized in that**, for the connection of the auxiliary material layer (31) to the front end (12) of the backrest frame (11), the auxiliary material layer (31) is guided around a holding part (70) which is connected to the front end of the backrest frame (11).

9. The vehicle occupant restraint system as claimed in claim 8, **characterized in that** the holding part (70) is screwed to the front end (12) of the backrest frame (11).

10. The vehicle occupant restraint system as claimed in claim 8 or 9, **characterized in that** the holding part (70) is connected to that end side (12) of the backrest frame (11) which points in the direction of travel.

11. The vehicle occupant restraint system as claimed in one of claims 1 to 8, **characterized in that** the auxiliary material layer (31') forms a loop with a layer (311') which faces toward the airbag (3) and a layer (312') which faces away from the airbag (3).

12. The vehicle occupant restraint system as claimed in claim 11, **characterized in that** the auxiliary material layer (31') is connected to the backrest frame (11) adjacent to the end side (12) thereof.

13. The vehicle occupant restraint system as claimed in one of the preceding claims, **characterized in that** an airbag module carrier (40) is also provided, which airbag module carrier (40) is likewise connected to the front end (12) of the backrest frame (11).

14. The vehicle occupant restraint system as claimed in claim 13, if referred back to claim 8, **characterized in that** the module carrier (40) is connected together with the holding part (70) to the front end (12) of the backrest frame (11).

15. The vehicle occupant restraint system as claimed in claim 13, if referred back to claim 11, **characterized in that** the module carrier (40) is arranged in the loop formed by the auxiliary material layer (31') and is connected together with at least one layer of the loop to the front end (12) of the backrest frame (11).

16. The vehicle occupant restraint system as claimed in one of the preceding claims, **characterized in that** the airbag (3) has one or more darts (33, 34) in order to form one or more non-inflatable partial regions (330, 340) of the airbag (3).

17. The vehicle occupant restraint system as claimed in one of the preceding claims, **characterized in that** the airbag (3) forms at least one buckling-resistant, substantially vertically-running column (350).

18. The vehicle occupant restraint system as claimed in one of the preceding claims, **characterized in that** the airbag (3) forms at least one buckling-resistant, substantially horizontally-running column (370).

19. The vehicle occupant restraint system as claimed in one of the preceding claims, **characterized in that that** region (360) of the inflated airbag (3) which is connected to the auxiliary material layer (31) is supported on the backrest frame (11) and thereby provides stabilization and positioning of the airbag (3).

20. The vehicle occupant restraint system as claimed in one of the preceding claims, **characterized in that** the inflated airbag (3) has a main chamber (3a) and at least one auxiliary chamber (3b), with the main chamber (3a) being connected to the backrest frame (11) at the front end of the latter in the direction of travel, and with the auxiliary chamber (3b) adjoining that side of the main chamber (3a) which faces away from the direction of travel and being flow-connected to the main chamber (3a).

21. The vehicle occupant restraint system as claimed in claim 20, **characterized in that** the at least one auxiliary chamber (3b) at least partially engages laterally around the vehicle seat (10) at that side of the latter which faces away from the direction of travel.

22. The vehicle occupant restraint system as claimed in one of the preceding claims, **characterized in that** the airbag (3) has at least one check strap (80) which runs in the interior of the airbag (3) and which, in the inflated state, connects a first layer (38) of the airbag and a second layer (39) of the airbag to one another.

23. The vehicle occupant restraint system as claimed in claim 22, **characterized in that** the check strap (80) extends substantially in the direction of travel in the inflated airbag.

24. The vehicle occupant restraint system as claimed in one of the preceding claims, **characterized in that** the gas internal pressure in the inflated airbag (3) is over 1.5 bar, and is particularly preferably approximately 2 bar.

25. The vehicle occupant restraint system as claimed in one of the preceding claims, **characterized in that** the airbag (3) has no gas outlet openings.

26. The vehicle occupant restraint system as claimed in one of the preceding claims, **characterized in that** the folded airbag (3), which is connected to the front end (12) of the backrest frame (11) over a defined length, is stored in the vehicle seat (10) in a substantially vertical direction along the backrest frame (11).

## Revendications

1. Système de retenue d'un passager de véhicule avec un siège de véhicule et un sac à gaz (3) gonflable et monté dans le siège de véhicule (10) qui se déploie au moins partiellement dans le sens de la marche en cas de déclenchement sur le côté du siège de véhicule (10) tourné vers l'intérieur du véhicule, le siège de véhicule (10) présentant un cadre de dossier (11) qui s'étend dans le siège de véhicule (10) dans le sens essentiellement vertical et est orienté essentiellement dans le sens de la marche,
**caractérisé en ce que**
le sac à gaz (3) est relié sur l'extrémité avant (12) dans le sens de la marche du cadre de dossier (11) à celui-ci, la liaison du sac à gaz (3) au cadre de dossier (11) étant effectuée à l'aide d'une couche de tissu supplémentaire (31, 31') qui est reliée d'une part au sac à gaz (3) et d'autre part à l'extrémité avant (12) du cadre de dossier (11), et la liaison ainsi formée du sac à gaz (3) au cadre de dossier (11) étant effectuée le long d'une ligne de jonction (37), qui s'étend selon la forme du cadre de dossier (11) essentiellement dans le sens vertical.

2. Système de retenue d'un passager de véhicule selon la revendication 1, **caractérisé en ce que** la liaison du sac à gaz (3) au cadre de dossier (11) est effectuée sur le côté avant (12) du cadre de dossier (11) tourné dans le sens de la marche.

3. Système de retenue d'un passager de véhicule selon la revendication 1, **caractérisé en ce que** la liaison du sac à gaz (3) au cadre de dossier (11) est effectuée de manière contigüe au côté avant (12) du cadre de dossier (11) tourné dans le sens de la marche.

4. Système de retenue d'un passager de véhicule selon la revendication 1 ou 3, **caractérisé en ce que** la distance entre la structure de liaison (60') pour la fixation du sac à gaz (3) sur le dossier de cadre (11) et le côté avant (12) du cadre de dossier (11) n'est pas plus grande que la moitié de la distance entre le côté avant (12) et l'extrémité arrière (13) dans le sens de la marche du cadre de dossier (11).

5. Système de retenue d'un passager de véhicule selon l'une quelconque des revendications précédentes, **caractérisé en ce que** le sac à gaz (3) est relié le long de la ligne de jonction (37) à l'aide d'une pluralité de points de fixation (32) au cadre de dossier (11).

6. Système de retenue d'un passager de véhicule selon l'une quelconque des revendications précédentes, **caractérisé en ce que** la liaison de la couche de tissu supplémentaire (31) au sac à gaz (3) comporte une couture de la couche de tissu supplémentaire (31) avec l'une des couches de tissu (39) du sac à gaz (3) le long de sa périphérie.

7. Système de retenue d'un passager de véhicule selon l'une quelconque des revendications précédentes, **caractérisé en ce que** la liaison de la couche de tissu supplémentaire (31) au sac à gaz (3) comporte un collage de la couche de tissu supplémentaire (31) avec l'une des couches de tissu (39) du sac à gaz (3).

8. Système de retenue d'un passager de véhicule selon l'une quelconque des revendications précédentes, **caractérisé en ce que** pour la liaison de la couche de tissu supplémentaire (31) à l'extrémité avant (12) du cadre de dossier (11), la couche de tissu supplémentaire (31) est guidée autour d'une partie de retenue (70) reliée à l'extrémité avant du cadre de dossier (11).

9. Système de retenue d'un passager de véhicule selon la revendication 8, **caractérisé en ce que** la partie de retenue (70) est vissée à l'extrémité avant (12) du cadre de dossier (11).

10. Système de retenue d'un passager de véhicule selon la revendication 8 ou 9, **caractérisé en ce que** la partie de retenue (70) est reliée au côté avant (12) du cadre de dossier (11) tourné dans le sens de la marche.

11. Système de retenue d'un passager de véhicule selon l'une quelconque des revendications 1 à 8, **caractérisé en ce que** la couche de tissu supplémentaire (31') réalise une boucle avec une couche (311') tournée vers le sac à gaz (3) et une couche (312') éloignée du sac à gaz (3).

12. Système de retenue d'un passager de véhicule selon la revendication 11, **caractérisé en ce que** la couche de tissu supplémentaire (31') est reliée de manière contigüe au côté avant (12) du cadre de dossier (11) à celui-ci.

13. Système de retenue d'un passager de véhicule selon l'une quelconque des revendications précédentes, **caractérisé en ce qu'**un support de module de sac à gaz (40) est en outre prévu, lequel est aussi relié à l'extrémité avant (12) du cadre de dossier (11).

14. Système de retenue d'un passager de véhicule selon la revendication 13, dans la mesure où elle se rapporte à la revendication 8, **caractérisé en ce que** le support de module (40) est relié conjointement avec la partie de retenue (70) à l'extrémité avant (12) du cadre de dossier (11).

15. Système de retenue d'un passager de véhicule selon la revendication 13, dans la mesure où elle se rapporte à la revendication 11, **caractérisé en ce que** le support de module (40) est disposé dans la boucle formée par la couche de tissu supplémentaire (31') et est relié conjointement avec au moins une couche de la boucle à l'extrémité avant (12) du cadre de dossier (11).

16. Système de retenue d'un passager de véhicule selon l'une quelconque des revendications précédentes, **caractérisé en ce que** le sac à gaz (3) présente une ou plusieurs pinces (33, 34) pour la réalisation d'une ou de plusieurs zones partielles (330, 340) non gonflables du sac à gaz (3).

17. Système de retenue d'un passager de véhicule selon l'une quelconque des revendications précédentes, **caractérisé en ce que** le sac à gaz (3) réalise au moins une colonne (350) résistante au flambage, s'étendant essentiellement verticalement.

18. Système de retenue d'un passager de véhicule selon l'une quelconque des revendications précédentes, **caractérisé en ce que** le sac à gaz (3) réalise au moins une colonne (370) résistante au flambage, s'étendant essentiellement horizontalement.

19. Système de retenue d'un passager de véhicule selon l'une quelconque des revendications précédentes, **caractérisé en ce que** la zone (360) du sac à gaz (3) gonflé qui est reliée à la couche de tissu supplémentaire (31), s'appuie contre le cadre de dossier (11) et met à disposition par là-même une stabilisation et un positionnement du sac à gaz (3).

20. Système de retenue d'un passager de véhicule selon l'une quelconque des revendications précédentes, **caractérisé en ce que** le sac à gaz gonflé (3) présente une chambre principale (3a) et au moins une chambre supplémentaire (3b), la chambre principale (3a) étant liée sur l'extrémité avant dans le sens de la marche du cadre de dossier (11) à celui-ci et la chambre supplémentaire (3b) étant contiguë sur le côté éloigné du sens de la marche de la chambre principale (3 a) à celle-ci et se trouvant en liaison d'écoulement avec la chambre principale (3a).

21. Système de retenue d'un passager de véhicule selon la revendication 20, **caractérisé en ce que** l'au moins une chambre supplémentaire (3b) entoure latéralement au moins en partie le siège de véhicule (10) sur son côté éloigné du sens de la marche.

22. Système de retenue d'un passager de véhicule selon l'une quelconque des revendications précédentes, **caractérisé en ce que** le sac à gaz (3) présente au moins une bande de garde (80) s'étendant à l'intérieur du sac à gaz (3) qui relie à l'état gonflé, l'une à l'autre une première couche (38) du sac à gaz et une seconde couche (39) du sac à gaz.

23. Système de retenue d'un passager de véhicule selon la revendication 22, **caractérisé en ce que** la bande de garde (80) s'étend dans le sac à gaz gonflé essentiellement dans le sens de la marche.

24. Système de retenue d'un passager de véhicule selon l'une quelconque des revendications précédentes, **caractérisé en ce que** la pression interne du gaz dans le sac à gaz (3) gonflé se trouve au-dessus de 1,5 bar, en particulier de préférence environ à 2 bars.

25. Système de retenue d'un passager de véhicule selon l'une quelconque des revendications précédentes, **caractérisé en ce que** le sac à gaz (3) ne présente aucune ouverture de sortie de gaz.

26. Système de retenue d'un passager de véhicule selon l'une quelconque des revendications précédentes, **caractérisé en ce que** le sac à gaz (3) plié, relié à l'extrémité avant (12) du cadre de dossier (11) sur une longueur définie est rangé dans le sens essentiellement vertical le long du cadre de dossier (11) dans le siège de véhicule (10).
